# EUROPEAN PATENT APPLICATION

(11) **EP 1 120 489 A1**
(43) Date of publication of application: **01.08.2001**
(21) Application number: 98959219.1
(22) Date of filing: 15.12.1998
(51) Int. Cl.: D06H 5/00

(54) **METHOD OF BONDING WATERPROOF FABRICS**

(30) Priority: 13.08.1998 JP 22914898
(71) Applicant: Asahi Kasei Kabushiki Kaisha, Osaka-shi, Osaka 530-8205 (JP)
(72) Inventor: YASUE, Masaharu, Uji-shi, Kyoto 611-0029 (JP); KAMIYA, Masami, Kawanishi-shi, Hyogo 666-0115 (JP)
(74) Representative: Weber, Thomas, Dr.Dipl.-Chem.
(86) International application number: JP9805665
(87) International publication number: WO0009795

(57) **Abstract**

The present invention provides a method for bonding waterproof fabrics, while sewing fabrics that are waterproofed with a resin film, which comprises providing a hot-melt adhesive layer between waterproof fabrics, sewing a portion to be bonded, holding the sewed portion between a pair of metal electrodes curved in a circular arc form, and high-frequency heating the hot-melt resin adhesive so that the resin adhesive is melt bonded.

The bonding method can uniformly bond the sewed portion and provide excellent waterproofness to the entire sewed portion even when the sewed portion is curved in a plane or three dimensionally, or the thickness of the sewed portion partially differs as in the collar portion, the sleeve portion or crotch portion of clothing. Moreover, the sewed portion has an excellent bonding strength, and a sewed article that does not become hard can be obtained.

## Description

### Technical Field

The present invention relates to a method for bonding waterproof fabrics, in order to prevent the penetration of water into sewed portions, during the production of waterproof articles by sewing waterproof fabrics.

### Background Art

Waterproof fabrics obtained by forming a resin film on base fabrics are mainly used for ordinary clothing for rainy weather such as raincoats, sportswear such as jumper coats and windbreakers, clothing for mountain climbing, outdoor work clothing for rainy weather, and the like.

Even though the fabrics themselves for such clothing for rainy weather as mentioned above have excellent waterproofness, the resin film is destroyed by a sewing needle and through-holes are formed in sewed portions of the fabrics. As a result, water preferentially penetrates the interior through the needle holes.

In order to prevent water penetrating the interior of the clothing through the needle holes in the sewed portions, a tape is usually adhered to the back side of the sewed portions, namely, the fiber base material side. However, no tape completely closely adheres to the fiber base material because the surface of the fiber base material is nonuniform. As a result, water having reached the back side through the needle holes begins to leak out from the interface between the fiber base material and the tape.

When the fiber base material is formed from fibers or spun yarns having a large denier, the leaking tendency is significant. Moreover, when the tape is adhesive bonded, the bonded portion hardens. When the sewed portion is curved, wrinkles are formed on the tape or the tape is shifted from the sewed portion, whereby the waterproofness of the sewed portion is decreased.

It is known that there is a method for bonding waterproof fabrics together without sewing, wherein a thermoplastic resin is allowed to intervene between waterproof fabrics, and the thermoplastic resin is melted by a heater, a high-frequency welder, an ultrasonic welder or the like apparatus. The method has the following problems: the bonding strength is low; the bonded portion is hard; and cracks or breakage is caused in the resin to lower the waterproofness when the bonded portion is repeatedly bent. Japanese Utility Model Publication (Kokoku) No. 62-24516 discloses a method comprising, as shown in Fig. 11 in the attached drawings, overlapping waterproof fabrics (B1) and (B2) having waterproof layers (5a), (5b) formed from a thermoplastic resin such as a polyvinyl chloride on one surface of each of the base fabrics (10) so that the waterproof layers face each other, folding the end portion of the waterproof fabric (B1) back while a melt-bonding tape (6) composed of a thermoplastic resin such as a polyvinyl chloride is being held, sewing the fabrics along the edges thereof with a sewing yarn (7), and bonding the fabrics by melting the waterproof layers and the melt-bonding tape with, for example, a high-frequency welder the electrodes (a), (a') of which hold the overlapped portions.

The method improves the waterproofness and bonding strength of the sewed portion. However, marks formed by pressing the mold electrodes on the sewing surface remain in the bonded portion. Moreover, cracks or breakage are caused in the sewed portion when the sewed portion are repeatedly bent because the sewed portion is harder than others. When the sewed articles are used as clothing, the clothing fits poorly, and shows poor adaptability to the body movement, because the method makes the sewed portion hard.

Japanese Utility Model Publication (Kokoku) No. 61-31749 discloses a method comprising allowing an expandable sheet to intervene between fabrics, sewing the portion with a sewing yarn, and foaming the expandable sheet by heating to block the needle holes. Although the method improves the waterproofness of the sewed portion, the waterproofness of the sewed portion is insufficient compared with that of portions other than the sewed one, and is lowered when the fabrics are used over a long period of time. Furthermore, the sewed articles get out of shape due to an increase in the thickness of the sewed portions.

Japanese Unexamined Patent Publication (Kokai) No. 6-246076 discloses a method for improving the waterproofness of a sewed portion, comprising holding a hot-melt film or cobwebbed tape in the sewed portion of waterproof fabrics, welt stitching the film- or tape-holding portion, and melting the hot-melt resin.

WO 96/16220 discloses a method for improving the bonding strength and bending resistance of the sewed portion during melting the hot-melt resin by high-frequency heating in the method mentioned above; the method comprises applying a current while an elastic sheet is allowed to intervene between an electrode and a welt stitched portion. The method is an extremely excellent one for applying waterproofness to the sewed portion. However, it has been found that the waterproofness and bonding strength of the collar portion, the sleeve portion and the like portions are low in comparison with other bonded portions even when they are bonded by the method.

As a result of analyzing the cause, the present inventors have found that the low waterproofness and bonding strength of the collar portions and sleeve portions are brought about by the presence of uneven fusion of the hot-melt adhesive therein.

The methods described in Japanese Unexamined Patent Publication (Kokai) No. 6-246076 and WO 96/16220 are excellent as the ones for bonding a sewed portion when the sewed portion is linear and horizontal. However, the sewed portion is neither necessarily linear nor necessarily horizontal, because the clothing is prepared by sewing in accordance with a human body. For example, the collar portion is curved, and fabrics are overlapped in multilayers in the sleeve portion and crotch portion. When such a portion obtained by sewing a sewed portion in which a hot-melt resin is allowed to intervene is held between conventional plane high-frequency electrodes and high-frequency heating is conducted, uneven fusion of the hot-melt resin is generated, and air bubbles remain in the overlapped portion of the fabrics and in the needle hole portions in the area where the resin is insufficiently melted; water penetrates the interior of the clothing from the portions. Moreover, the bonding strength between waterproof fabrics is low in comparison with other portions. When the voltage of the high-frequency heating apparatus is increased in order to melt the entire hot-melt resin, an excessive current partially flows in the sewed portion, and sparks are generated to damage the fabrics.

### Brief Description of the Drawings

Fig. 1 is a view showing a cross section of the bonded structure of a sewed portion obtained by the method of the present invention.
Fig. 2 is a perspective view schematically showing the bonded structure in Fig. 1.
Fig. 3 is a plan view of the bonded structure of a sewed portion in a collarsewing portion obtained by the method of the present invention.
Fig. 4 is a view showing a cross section of the bonded structure in Fig. 3.
Fig. 5 is a plan view of the bonded structure of a sewed portion in a sleeve portion obtained by the method of the present invention.
Fig. 6 is a view showing a cross section of the bonded structure in Fig. 5.
Fig. 7 is a plan view of the bonded structure of a sewed portion in a crotch portion obtained by the method of the present invention.
Fig. 8 is a view showing a cross section of the bonded structure in Fig. 7.
Fig. 9 is a perspective view showing one embodiment of curved mold electrodes used in the present invention.
Fig. 10 is a perspective view showing one embodiment of the electrodes of a high-frequency welder used in the present invention.
Fig. 11 is a view showing a cross section of the known bonded structure of a sewed portion.

### Disclosure of the Invention

An object of the present invention is to provide a method for bonding waterproof fabrics which solves the above problems, and which applies uniform waterproofness to the entire sewed portion even when the sewed portion is curved, or it has a three dimensional structure, or it is thick because many fabrics are overlapped.

Another object of the present invention is to provide a method for bonding waterproof fabrics the sewed portion of which shows a high bonding strength and does not lower its waterproofness even when repeatedly bent over a long period of time.

A further object of the present invention is to provide a method for bonding waterproof fabrics the sewed portion of which does not have a hard feeling compared with that of non-sewed portions.

The present invention provides a method for bonding waterproof fabrics which comprises, while overlapping two or more waterproof fabrics each having a resin film on the surface of the base fabric and sewing the overlapped portion, providing a hot-melt resin adhesive layer between one or more pairs of waterproof fabrics in the overlapped portion, sewing the overlapped portion, holding the sewed portion between a pair of mold electrodes curved in a circular arc form that has a radius of curvature of 10 to 50 cm in a region where the angle of circumference with its center placed at the maximum part of the circular arc is from 25 to 95° and that has a circumference of 10 to 30 cm, and melt bonding the sewed portion by high-frequency heating the hot-melt resin adhesive.

Known sewing methods are used in the present invention. In particular, in order to apply high waterproofness and bonding strength to a sewed portion, a welt seam is preferred. A welt seam is a kind of sewing procedure that presses a seam allowance and stops fraying, and it is also called flat welt stitching. Specifically, welt seam includes the following methods: (1) seam allowances are turned over, the seam allowances which become internal portions are suitably cut off, and the seam allowance which will become an external portion is sewed to the face side fabric; and (2) seam allowances are turned over and sewed to the face fabric.

When waterproof fabrics are to be sewed, they are usually arranged so that the waterproof layers thereof are to be situated on the resultant product article surface open to the air, and sewed.

When waterproof fabrics are sewed together in the present invention, a hot-melt resin adhesive layer is provided between waterproof fabrics, and sewing is conducted. The hot-melt adhesive layer is preferably provided between two fabrics to be sewed and inside the turned over portion of one of the fabrics. When waterproof fabrics are overlapped in three or more layers and sewed, it is not always necessary to provide an adhesive layer to every interface formed by the fabrics. However, in order to make the waterproofness more complete, it is preferred to provide a hot-melt adhesive layer to every interface formed thereby.

Waterproof fabrics used in the present invention show a water resistance pressure of 800 mm H₂O or more, preferably from 1,000 to 80,000 mm H₂O, more preferably from 1,500 to 80,000 mm H₂O.

Although the fiber base material used for the waterproof fabrics usually is a woven fabric, the base material is not restricted thereto.

The waterproof fabrics are produced by coating one surface of the fiber base material with a resin solution, or laminating a resin film to the surface thereof.

Examples of the resin for applying waterproofness to the surface of the fiber base material include a rubber-based resin, a polyurethane-based resin, a polyacrylic resin, a polyamide-based resin, a polyvinyl chloride-based resin and a polyfluoro resin.

The permeability of the waterproof fabric is preferably 2,500 g/cm^{2.}24 hr or more, more preferably 4,000 g/cm^{2.}24 hr or more in order for it to feel comfortable.

Examples of the hot-melt resin include a polyamide-based copolymer, a water-insoluble acrylic copolymer and an ethylene-vinyl acetate copolymer. A polyamide-based hot-melt resin is preferably used in the present invention. In order to uniformly melt the hot-melt resin adhesive, the hot melt adhesive resin preferably has the following physical properties: a dielectric constant of 4.0 to 4.7; a dielectric power factor of 0.05 to 0.13; and the product of a dielectric constant and a dielectric power factor of 0.2 to 0.6.

It is preferred that the hot-melt resin adhesive have a molded sheet-like shape such as a film-like sheet, a net-like sheet or spun-bond-like sheet. A typical spun-bond-like hot-melt resin adhesive is produced by spirally extruding a molten thermoplastic resin through many nozzles, cooling the extruded resin, collecting the cooled resin in a continuous sheet form, and fixing the sheet.

The METSUKE (basis weight) of the sheet is preferably from 30 to 300 g/m², more preferably from 50 to 200 /m².

The sheet is cut to have a tape-like shape in accordance with the sewed portion, and used. When the sewed portion is curved, a flexible hot-melt resin adhesive having a film-like, net-like or spun-bond-like form is divided into pieces in accordance with the shape of the sewed portion so that the pieces each have a suitable width and a suitable length; they are then used.

The structure of the sewed portion differs depending on the location of the sewed portion in a waterproof article.

### Best Mode for Carrying Out the Invention

The present invention will be explained by taking sewing of clothing as examples.

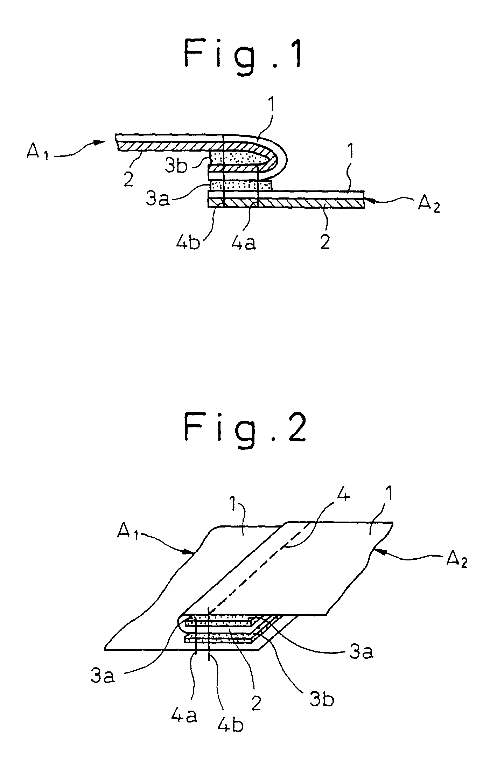

Most of the sewed portions of clothing have a simple welt seam structure as shown in Fig. 1. Waterproof fabrics A1, A2 each comprise a woven fabric 2 and a waterproof layer 1 formed from a polyurethane resin. The end portion of one of the waterproof fabrics and the other waterproof fabric are overlapped so that the waterproof layers face each other with an intervening hot-melt resin adhesive layer 3a placed between the two layers; the overlapped portion is sewed with a polyester sewing yarn 4a. The upper waterproof fabric is then bent to hold a hot-melt resin adhesive layer 3b, and the whole overlapped portion is sewed with a sewing yarn 4b.

As shown below, a sleeve portion, a collar portion, a crotch portion and the like portions are flatly or three dimensionally curved or configured or become thick due to overlapping in multilayers.

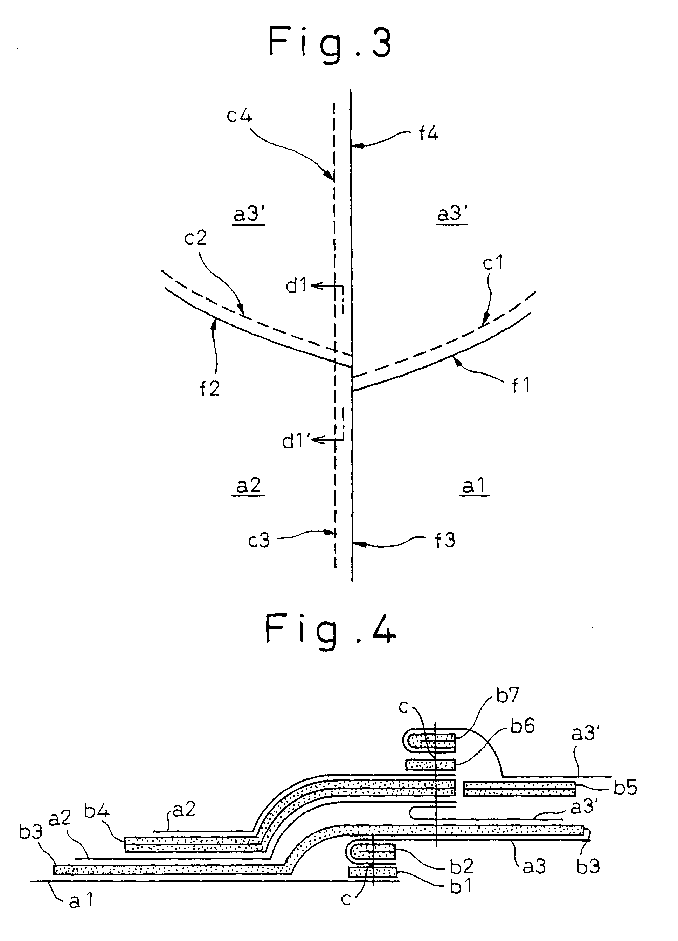

Fig 3 is a plan view of a sleeve portion, and Fig. 4 is a cross-sectional view along d1 - d1' of the sleeve portion in Fig. 3. A rear bodice a2 of a waterproof woven fabric is folded back along a folding back line f3, and welt stitched to a front bodice a1 along a stitching line c3 with a sewing yarn c. A sleeve a3 is folded back along a folding back line f1, and welt stitched to the front bodice a1 along a stitching line c1 with a sewing yarn c. A sleeve a3' is folded back along a folding back line f2, and welt stitched to the rear bodice a2 along a stitching line c2. At the same time, the sleeve a3' is folded back along a folding back line f4, and welt stitched to the sleeve a3 along a stitching line c4 with a sewing yarn c. In the sewed portion, hot-melt adhesive films b1 to b7 are each held between fabrics. As explained above, in the sleeve portion, waterproof fabrics are overlapped in multilayers and three dimensionally curved.

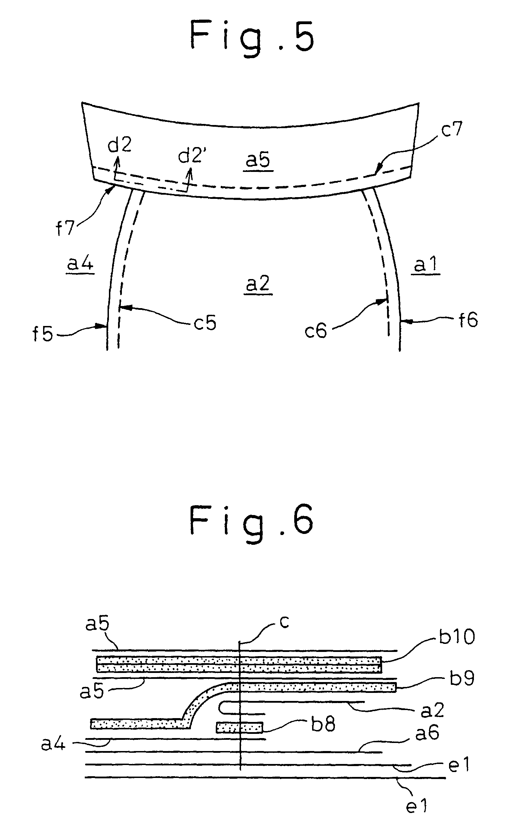

Fig. 5 is a plan view of a collarsewing portion, and Fig. 6 is a cross-sectional view of the collarsewing portion along d2 - d2' in Fig. 5. A rear bodice a2 of a waterproof woven fabric is folded back along folding back lines f5 and f6, and welt stitched to a front bodice a4 along a stitching line c5 and a front bodice a1 along a stitching line c6 with a sewing yarn c. A face collar a5 is folded back along a folding back line f7, and the folded back portion, the seam parts of the above bodice pieces, a back collar a6 and a back fabric el folded back in the bodice piece direction are overlapped, and the overlapped portion is welt stitched along a stitching line c7 with a sewing yarn c. In the sewed portion, hot melt adhesive films b8 to b10 are held among the face collar to become the outermost layer and the bodice pieces, and between each front bodice and the rear bodice. As explained above, the collarsewing portion also has a multilayered overlapped structure, and is three dimensionally curved.

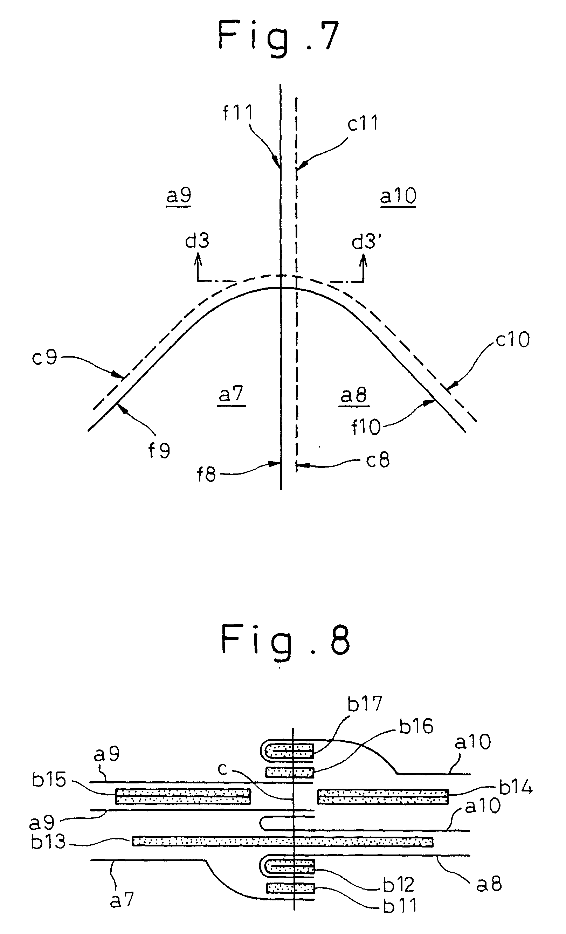

Fig. 7 is a plan view of a crotch portion, and Fig. 8 is a cross-sectional view of the crotch portion along d3 - d3' in Fig. 7. A rear bodice a8 of a waterproof woven fabric is folded back along a folding back line f8, and welt stitched to a rear bodice a7 along a stitching line c8 with a sewing yarn c. A front bodice a9 is folded back along a folding back line f9, and welt stitched to the rear bodice a7 along a stitching line c9 with a sewing yarn c. A front bodice a10 is folded back along a folding back line f10, and welt stitched to the rear bodice a8 along a stitching line c10 with a sewing yarn c. At the same time, the front bodice a10 is folded back along a folding back line f11, and welt stitched to the front bodice a9 along a stitching line c11 with a sewing yarn c. In the sewing portion, hot melt adhesive films b11 to b17 are each held by a waterproof fabric or between waterproof fabrics. Similarly to the sleeve portion and collarsewing portion, such a crotch portion has a multilayered overlapped structure and is three dimensionally curved.

As explained above, for a sewed portion where waterproof fabrics are overlapped in multilayers and/or curved, it is extremely important to use the curved mold electrodes according to the present invention during melt bonding the sewed portion by melting hot-melt resin adhesive held between waterproof fabrics by high-frequency heating.

In the field of plastic molding, when pieces of wood, rubber or plastics that are molded to have a certain shape are to be bonded using induction heating, mold electrodes suited to the shape of the pieces of material to be bonded are employed. Accordingly, when curved pieces of material are to be bonded, curved mold electrodes are used. In this case, the curved mold electrodes are used merely because the curved mold electrodes are made to conform to the shape of the pieces of material to be bonded.

In this respect, the object of using the curved mold electrodes in the present invention fundamentally differs from that of using the conventional ones in the conventional methods.

As disclosed in WO 96/16220, even when the sewed portion of waterproof fabrics has a curved shape, the sewed portion is melt bonded by holding the sewed portion between plane mold electrodes, and melting hot-melt resin adhesive layers. The procedure differs from molding of plastics because the waterproof fabrics are flexible.

Waterproof fabrics to be high-frequency heated differ from wood, rubber, plastic molded articles or the like in that the fabrics are thin, and have a small volume. Therefore, when there is a slight unevenness in base fabrics in the region to be high-frequency heated, an excessive current flows through a thinner portion and a portion having a smaller volume to generate sparks and damage the base fabrics. For example, when a sewed portion semicircularly curved in a plane similarly to the collar portion explained above is held between two plane molds, the inner edges of the sewed portion are partially overlapped to form an uneven thickness. That is, a folded portion is present together with a non-folded portion in the waterproof fabrics held between the two molds; as a result the fabrics come to have an uneven thickness, and a space is formed at a boundary between the folded portion and the non-folded portion.

When a sewed portion that is three dimensionally curved similarly to a sleeve portion is held between plane molds, waterproof fabrics are still more overlapped to form an uneven thickness and a space. When three or more base fabrics are partially overlapped similarly to the sewed portion in the sleeve or crotch portion, the overlapped fabrics come to have an uneven thickness caused by a difference in the number of the overlapped layers.

When there is a partially thick portion, application of a voltage determined from the thick portion causes a flow of an excessive current through a thin portion and a resultant damage of the base fabrics. On the other hand, application of a voltage determined from a thin portion causes uneven melt bonding because the hot-melt resin adhesive in the thick portion is not melted.

The present inventors have found that use of curved mold electrodes solves such antinomic problems.

The degree of the curvature of the electrodes can be experimentally determined from the degree of curvature of a portion to be sewed, the degree of uneven thickness caused by a difference in the number of overlappings of the waterproof fabrics in the portion to be sewed and the like. In general, when a sewed portion is curved in a plane or three dimensionally curved, mold electrodes having approximately the same curvature as that of the sewed portion are preferably used. When the sewed portion has an uneven thickness, mold electrodes having such an optimum degree of curvature that no sparks are generated and uniform melt bonding can be conducted should be selected by carrying out preliminary experiments using mold electrodes having various degrees of curvature.

The mold electrodes are curved in a circular arc form that preferably has a radius of curvature of 10 to 50 cm in a region where the angle of circumference with its center placed at the maximum part of the circular arc is from 25 to 95° and that preferably has a circumference of 10 to 30 cm.

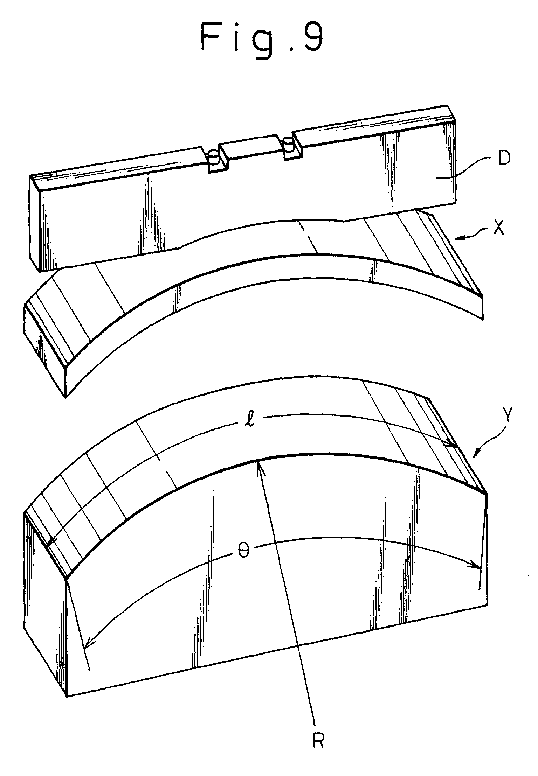

Fig. 9 shows one embodiment of mold electrodes used in the present invention. The mold electrodes of the embodiment comprise a top form X and a bottom form Y, and have a radius of curvature R, and an angle of circumference θ and a circumference l of a circular arc. D designates a support beam for the top form X; the top surface portion is inserted into the top form holder C and fixed thereto, and the inclination of the top form X in the front, back, right and left directions are adjusted with horizontal adjusting screws (I₁, I₂, I₃, I₄).

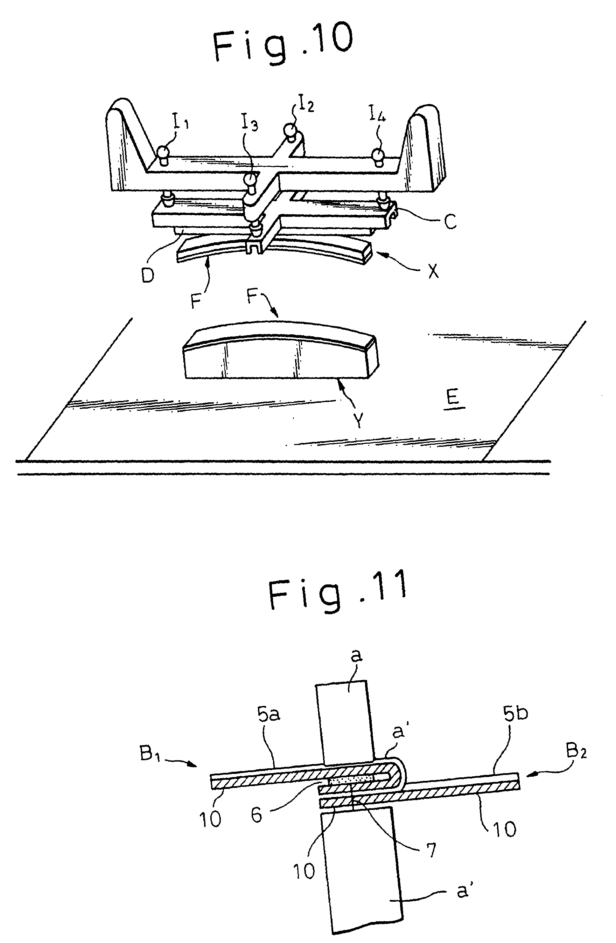

The sewed portion shown in Fig. 3, 5 or 7 is held between the mold electrodes X and Y, and melt bonded by a high-frequency welder shown in Fig. 10. That is, an overlapped article prepared by joining by welt stitching with a sewing machine is carried to a high-frequency welder wherein, as shown in Fig. 10, two silicone rubber elastic sheets F are laminated in advance to the top form X and the bottom form Y, respectively, using a double-coated tape, and the top and bottom forms X, Y are set on an upper curved electrode (a top form holder) C and a lower curved electrode (a surface table) E, respectively. The overlapped article is subsequently set on the bottom form of the high-frequency welder, and a high-frequency voltage is applied to melt the hot melt adhesive in the welt stitched seam portion under pressure and bond the seam portion.

The mold electrodes are formed from a good conductive optional metallic material such as copper, aluminum and brass.

High-frequency melt bonding conditions may be arbitrarily determined on the basis of the usually employed range. The elastic sheet used herein is effective in maintaining a gap between the hot-melt resin adhesive layer and any one of the electrode surfaces, and uniformly melting the hot-melt resin adhesive regardless of the shape of the sewed portion, the smoothness of the sewed portion surface, the type of a yarn used in the base fabrics and the texture and structure of the fiber base material.

The present invention will be specifically explained below by making reference to examples.

In the present invention, the water resistance pressure of a waterproof fabric and that of a bonded portion were measured in accordance with JIS L-1092 A and B.

### Example 1

A plain weave fabric (warp: 136 filaments/inch; weft: 110 filaments/inch; METSUKE: 100 g/m²) prepared from nylon 66 filaments (70 denier/36 filaments) was treated with a fluoro_compound-based water repellent). One side of the base fabric was coated with a polyurethane resin (an applied frequency: 1 x 10⁶ Hz; a dielectric constant at 20°C: 3.9; a dielectric power factor: 0.04; a melting point: 180°C). The polyurethane resin was then wet solidified to give a waterproof fabric having a polyurethane resin layer in an amount of 20 g/m². The water resistance pressure of the waterproof fabric was 1.8 kg/cm² (JIS L-1092B). Using the waterproof fabric, the parts of a sleeve portion (a front bodice al, a rear bodice a2, a sleeve a3 in Figs. 3, 4) were cut. A film-like polyamide copolymer hot-melt adhesive (applied frequency: 1 x 10⁶ Hz; a dielectric constant at 20°C: 4.3; a melting point: 100°C, METSUKE: 100 g/m²) that was commercially available and that had a width of 10 mm or 18 mm and a thickness of 80 µm was held by a part and/or between parts in a portion to be sewed, and sewed.

Using a high-frequency welder shown in Fig. 10 and equipped with a pair of curved molds that had an angle of circumference of 45.8°, a radius of curvature of 25 cm and a circumference of a circular arc of 20 cm, the resultant sewed portion was held between a pair of mold electrodes of the present invention shown in Fig. 9 after two silicone rubber sheets 5 mm thick had been laminated to the mold electrodes, respectively. The sewed portion was high-frequency heated under the following conditions to melt-bond the hot-melt adhesive: an applied frequency of 40 MHz; a tuning scale of 50; a pressure scale of 1/4 (pedal pressing type); an anode current of 0.25 A; and an oscillation time of 7 sec.

As a result, the hot-melt resin alone was uniformly melted, and the curved portion and the overlapped portion in multilayers were uniformly melt bonded without damage. The resultant bonded portions showed the following water resistance pressure (JIS L-1092A): 200 cm H₂O or more at a portion where two waterproof fabrics were bonded; and 180 cm H₂O or more at a portion where three fabrics were bonded.

### Example 2

Using the same waterproof fabrics as in Example 1, the parts of a collar portion (front bodices a1, a4, a rear bodice a2, a face color a5 and a back collar a6 in Figs. 5, 6) and a back fabric el were cut. These parts, the back fabric and the hot melt films were overlapped as shown in Figs. 5 and 6, and sewed in the same manner as in the sleeve portion. The sewed portion was then high-frequency heated in the same manner as in Example 1 so that the waterproof fabrics were bonded. The bonded portion in a5-a2 and the sewed portion in a1-a2-a5 showed a water resistance pressure (JIS L-1092A) of 200 cm H₂O or more, and 180 cm H₂O or more, respectively.

### Example 3

Using the same waterproof fabrics as in Example 1, the parts of a crotch portion (front bodices a9, a10; and rear bodices a7, a8 in Figs. 7, 8) were cut. These parts and the above hot melt films were overlapped as shown in Figs. 7 and 8, sewed in the same manner as in the sleeve portion, and bonded by high-frequency heating in the same manner as in Example 1. The portion where four waterproof fabrics were overlapped and bonded showed water resistance pressure (JIS L-1092A) of 180 cm H₂O or more.

### Comparative Example 1

High-frequency heating was conducted in the same manner as in Example 1 except that known plane electrodes were used. Sparks were generated sometimes during high-frequency heating. As a result, the bonded portion partially wrinkled, and portions where the hot-melt adhesive was insufficiently melted were observed. The portion where three waterproof fabrics were overlapped and bonded showed water resistance pressure (JIS L-1092A) of 30 cm H₂O.

### Industrial Applicability

The bonding method of the present invention can provide excellent waterproofness to the entire sewed portion even when the sewed portion is either curved in a plane or three dimensionally, or the thickness of the sewed portion partially differs, in the same manner as in a collar portion, a sleeve portion or a crotch portion. Moreover, the portions sewed by the method of the present invention are excellent in bonding strength, and the feel does not become hard.

## Claims

1. A method for bonding waterproof fabrics, which comprises, during overlapping two or more waterproof fabrics each having a resin film on the surface of the base fabric and sewing the overlapped portion, providing a hot-melt resin adhesive layer between one or more pairs of waterproof fabrics in the overlapped portion, sewing the overlapped portion, holding the sewed portion between a pair of mold electrodes curved in a circular arc form that has a radius of curvature of 10 to 50 cm in a region where the angle of circumference with its center placed at the maximum part of the circular arc is from 25 to 95° and that has a circumference of 10 to 30 cm, and melt bonding the sewed portion by high-frequency heating the hot-melt resin adhesive.

2. The method for bonding waterproof fabrics according to claim 1, wherein the overlapped portion is welt stitched.

3. The method for bonding waterproof fabrics according to claim 1, wherein the hot-melt resin adhesive is held between every two waterproof fabrics, and the resin adhesive is melted by high-frequency heating.
